# EUROPEAN PATENT APPLICATION

(11) **EP 4 503 778 A1**
(43) Date of publication of application: **05.02.2025**
(21) Application number: 23775369.4
(22) Date of filing: 27.03.2023
(51) Int. Cl.: H04W 60/04, H04W 60/06, H04W 76/30, H04L 41/34, H04W 8/22, H04W 88/14

(54) **COMMUNICATION RELATED TO COMMUNICATION STATE**

(30) Priority: 25.03.2022 US 202263323507 P; 15.09.2022 US 202263406737 P
(71) Applicant: LG Electronics Inc., Yeongdeungpo-gu Seoul 07336 (KR)
(72) Inventor: YOUN, Myungjune, Seoul 06772 (KR); KIM, Hyunsook, Seoul 06772 (KR); KIM, Laeyoung, Seoul 06772 (KR)
(74) Representative: Plasseraud IP
(86) International application number: PCT/KR2023/004008
(87) International publication number: WO 2023/182874

(57) **Abstract**

Disclosed is a method for an AMF to perform communication related to a communication state. The method comprises the steps of: receiving a registration request message, including capability information related to an unavailability period, from a UE; receiving a message, including unavailability period information, from the UE; and transmitting, to an NEF, an event notification message including time information based on the unavailability period information.

## Description

### TECHNICAL FIELD

The present specification relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

The terminal may not be able to communicate with the network for reasons such as upgrading the operating system (OS). In such cases, if data needs to be transmitted from the server to the terminal, the data cannot be transmitted. If the terminal is providing a specific service, commands from the server may not be transmitted to the terminal, and the user may not be able to use the service properly.

### DISCLOSURE

### TECHNICAL SOLUTION

In one aspect, a method is provided for an AMF to perform communications related to a communication status. The method may include: receiving a registration request message from a UE including capability information related to an unavailability period; transmitting a registration accept message to the UE including information that, based on the capability information associated with the unavailability period, the UE supports the unavailability period; receiving a message from the UE including unavailability period information; and transmitting an event notification message to an AF via the NEF including time information based on the unavailability period information.

In another aspect, an apparatus implementing the above method is provided.

In one aspect, a method for a UE to perform communications related to a communication status is provided. The method may include: transmitting a registration request message to an AMF including capability information related to an unavailability period; receiving a registration acceptance message from the AMF including information that the unavailability period is supported; and transmitting a message to the AMF including the unavailability period information.

In another aspect, an apparatus implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a registration procedure to which implementations of the present disclosure is applied.
FIG. 7 illustrates an example of a procedure for reporting an unavailability period, according to one embodiment of the present disclosure.
FIG. 8 illustrates an example of a UE-initiated deregistration procedure, according to one embodiment of the present disclosure.
FIG. 9 illustrates an example of a procedure related to NEF service behavior, according to one embodiment of the present disclosure.
FIG. 10 illustrates an example of a procedure for reporting an unavailability period, according to one embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

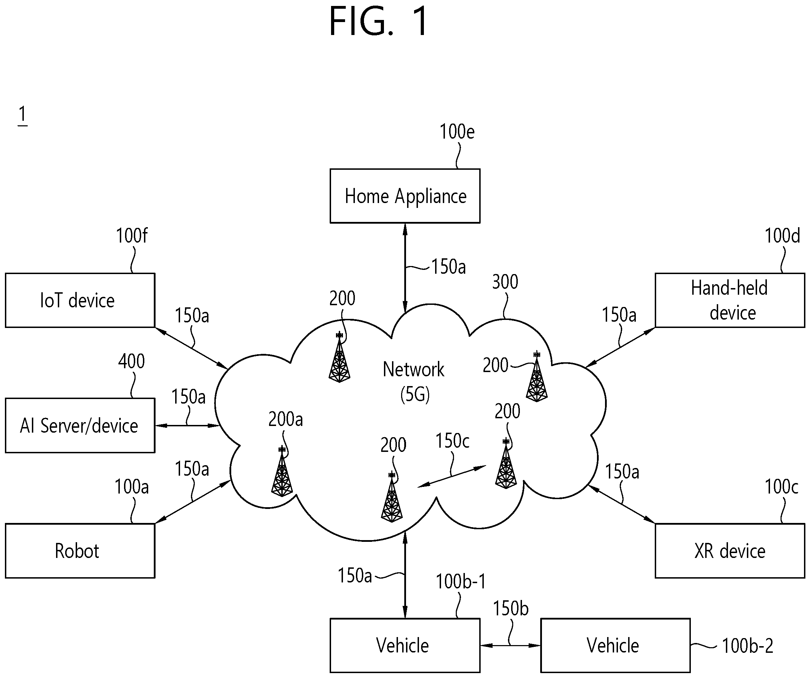

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/SG devices. The wireless devices 100a to 100f may include, without being limited to, a robot 100a, vehicles 100b-1 and 100b-2, an extended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmiting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

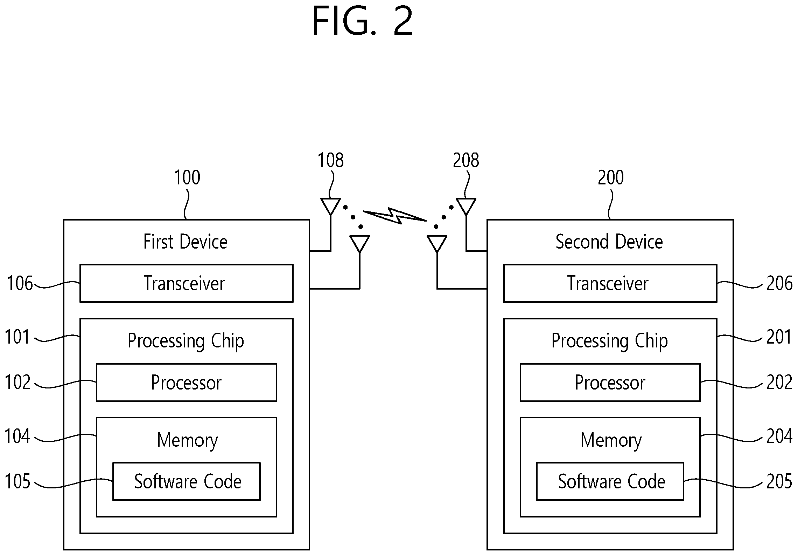

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

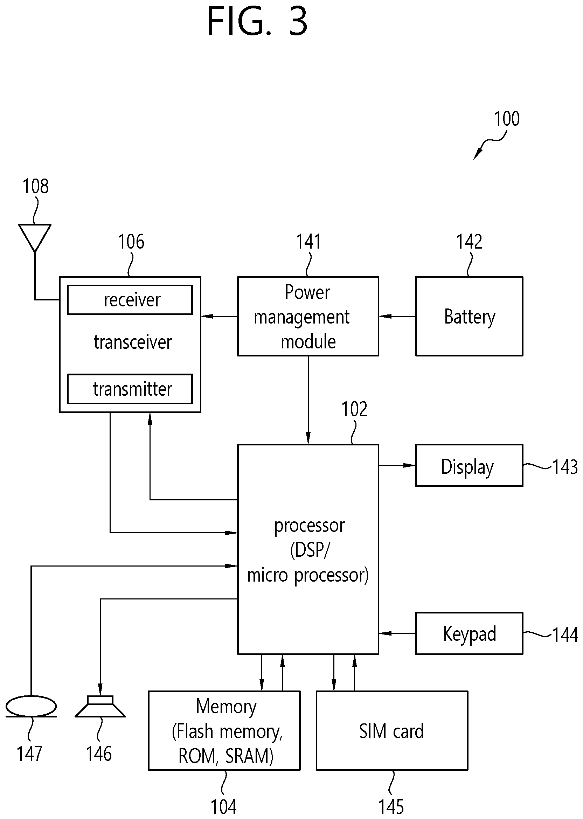

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

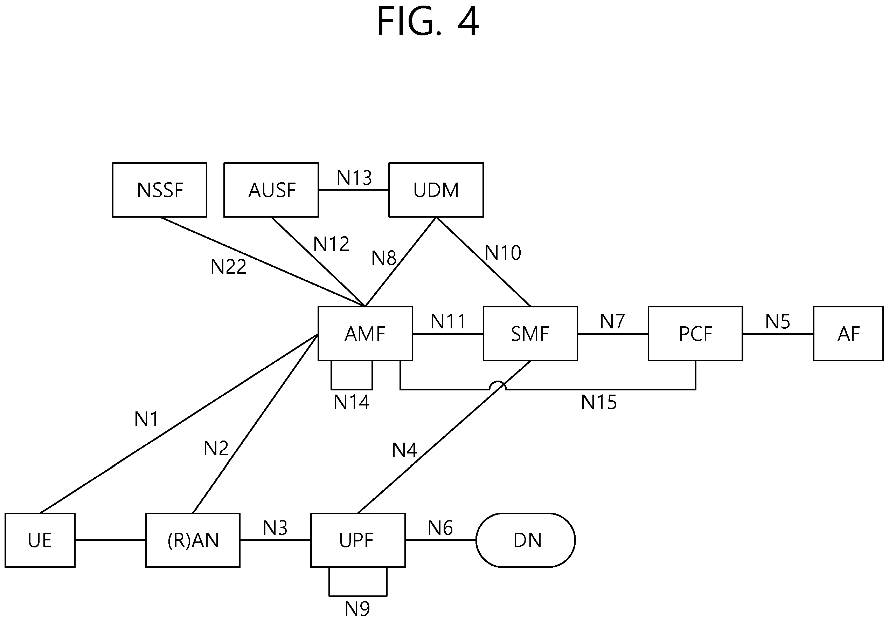

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

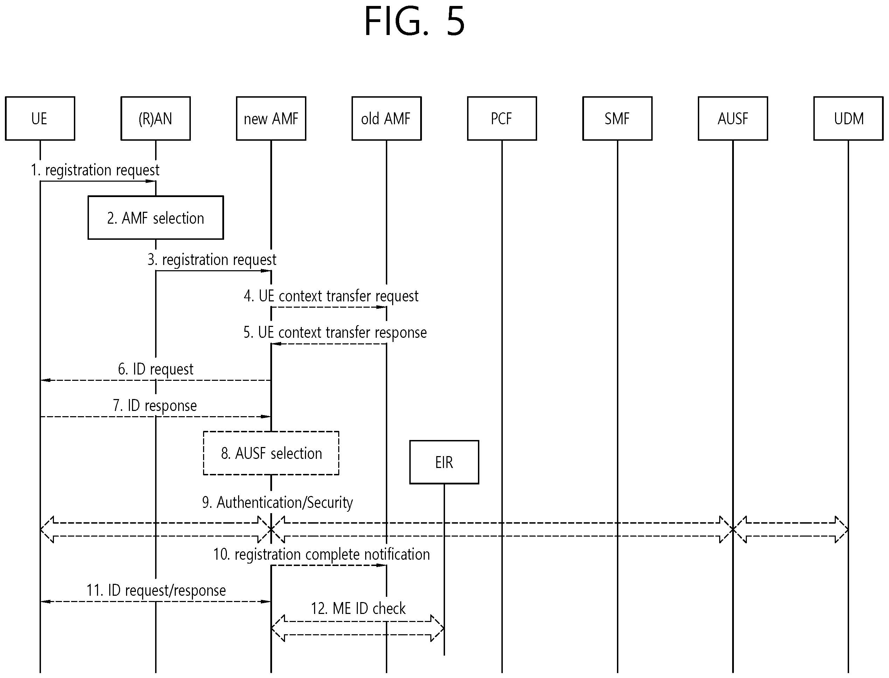

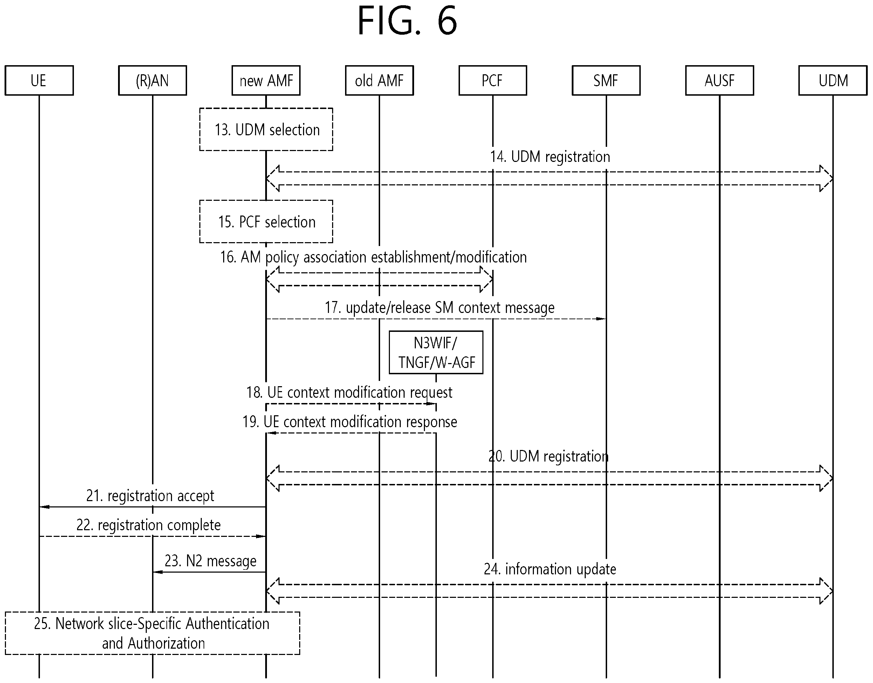

FIGS. 5 and 6 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF transmitting the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF transmitting an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the oldAMF are in the same PLMN, the new AMF may transmit a UE Context Modification Request to the N3IWF/TNGF/W-AGF.

(19) Step 19: The N3IWF/TNGF/W-AGF may transmit a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF transmits a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall transmit the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each Single Network Slice Selection Assistance Information (S-NSSAI) of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may transmit a Registration Complete message to the new AMF when it has successfully updated itself.

The UE may transmit a Registration Complete message to the new AMF to acknowledge if a new 5G-GUTI was assigned.

(23) Step 23: For registration over 3GPP Access, if the new AMF does not release the signaling connection, the new AMF may transmit the RRC Inactive Assistance Information to the NG-RAN. For registration over non-3GPP Access, if the UE is also in CM-CONNECTED state on 3GPP access, the new AMF may transmit the RRC Inactive Assistance Information to the NG-RAN.

(24) Step 24: The new AMF may perform information update towards the UDM.

(25) Step 25: The UE may execute Network Slice-Specific Authentication and Authorization procedure.

### <Seamless UE context recovery>

There are discussions on how to seamlessly recover the UE context.

UEs have specific events (see below). The handling of these can vary depending on the UE implementation. The consequences of UE implementation are discussed in the issue descriptions below.
1. Silent reset at Modem
2. Security patch updates
3. OS upgrade
4. Modem SW updates
5. Terminal reboot upon Modem setting changes via OMA-DM

### Issue:

When executing any of the above events, such as an OS upgrade or modem SW update (commonly referred to as a binary update), there are three parties involved: The parties involved in terminal manufacturing, the operator and the application function. When the UE downloads the binary exactly when the UE is performing an upgrade (e.g., an upgrade left for the UE implementation), some UE implementations require user input, but no input is taken from the operator or application function. Each time such an operation is performed by the UE, the UE becomes unavailable for a few minutes. If the core network does not have prior knowledge of this situation and the UE becomes unavailable, it can impact operations if the UE is responsible for critical operations on the application server during the "unavailability period" (or unavailability period).

This requires coordination between UE and operator/application functions.

In the following disclosures, "unavailability period" may be referred to as an unavailability period or unavailability period.

In the present disclosure, the determination of the unavailability period of 5GS for a particular UE may be discussed.

For example, to trigger a specific event, such as an OS upgrade, a silent reset upon a modem or modem software update (commonly referred to as a binary update) involves three parties The terminal (e.g., UE), the operator and the application function. Once the UE downloads the binary, the time for the UE to perform the upgrade is left to the UE implementation, which may require user input. If a UE is unable to execute an event (e.g., low storage or battery level), the UE may delay the execution of the event. These UEs will be unavailable (i.e., unable to interact with the 5G system) for several minutes each time such an operation is performed. As UEs become unavailable, without prior knowledge of the core network and/or application functionality (i.e., without the core network and/or application having prior knowledge of this situation), critical operations on application servers that rely on the availability of UEs during periods of unavailability (i.e., when UEs are not available) may be impacted.

These issues can be discussed in the following:
a) Whether and how the unavailability period is determined in 5GS for a particular UE.
b) A discussion of the expected UE and/or network behavior (if any) based on the determined unavailability period.

The terminal may not be able to communicate with the network for reasons such as upgrading the operating system (OS). In such cases, if data needs to be transmitted from the server to the terminal, the data cannot be transmitted. If the terminal is providing a specific service, commands from the server may not be transmitted to the terminal, and the user may not be able to use the service properly.

If the network or server knows when a terminal will be unavailable, it can provide services to users at different times or through different terminals to avoid this situation. There is a need to discuss how to know when a terminal will be unavailable (e.g., unavailable time) and how to utilize the unavailable time. This should be done to reduce the impact on user services.

The following methods are disclosed herein to address the problem. The methods presented below may be performed or used in combination or complementarily.

In the following, various examples of the disclosure will be described with reference to a first example through a sixth example of the disclosure. It should be appreciated that one or more of the first example through the sixth example of the disclosure may be applied in combination.

### 1. The first example of the present disclosure

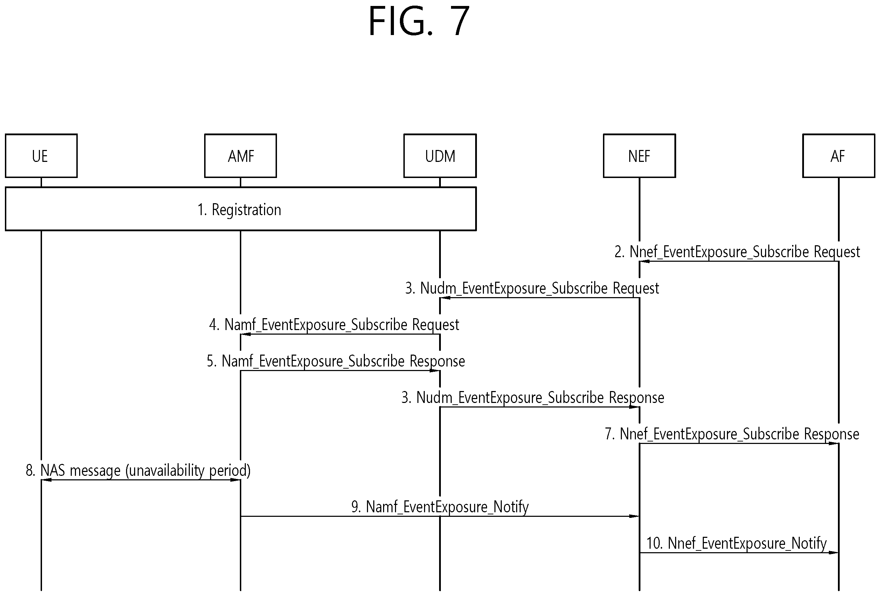

Referring to the example in FIG. 7, an example of how a Loss of Connectivity event subscription can be used to expose a UE unavailability period is described.

The following drawings are intended to illustrate specific embodiments of the present disclosure. The designations of specific terminals or the designations of specific signals/messages/fields shown in the drawings are for illustrative purposes only, and the technical features of this specification are not limited to the specific designations used in the drawings below.

FIG. 7 illustrates an example of a procedure for reporting an unavailability period, according to one embodiment of the present disclosure.

The example in FIG. 7 shows an example of the overall procedure for reporting unavailability periods to the Application Function (AF).

### 1. The UE is registered with the 5GC.

For example, the UE may be registered with the 5GC according to the registration procedure described in the examples of FIGS. 5 and 6.

In this case, the terminal (e.g., UE) may transmit capability information about the terminal's ability to provide unavailability periods during the registration procedure. The AMF may include information about whether it supports unavailability periods in the Registration accept message to inform the terminal. Only when the terminal receives this information can it include the unavailability period information in the NAS message in step 8.

For example, the UE may transmit a registration request message to the AMF, which may include 5G Mobility Management (5GMM) capability information. The 5GMM capability information may include the UN-PER bit. For example, UN-PER may be an abbreviation for unavailability period. The UN-PER bit may indicate the ability to support an unavailability period. For example, a UN-PER bit of 0 may indicate that an unavailability period is not supported, and a UN-PER bit of 1 may indicate that an unavailability period is supported. In addition, the registration request message may include information related to unavailability periods. The information related to the unavailability period may be the unavailability period duration. The AMF may transmit a registration acceptance message to the UE. The registration accept message may include information related to supporting the 5GS network feature. The information related to supporting the 5GS network feature may include information about whether the AMF supports the unavailability period. For example, the information related to 5GS network feature support may be 5GS network feature support. The 5GS network feature support may include a UN-PER bit. A UN-PER bit of 0 may indicate that the availability period is not supported, and a UN-PER bit of 1 may indicate that the availability period is supported.

2-7. The AF may subscribe (or subscribe to) a "Loss of Connectivity" event to the NEF based on procedures in accordance with prior art.

For example, the AF can transmit an event exposure subscription request message (e.g., Nnef_EventExposure_Subscribe Request message) to an NEF. The NEF may transmit an event exposure subscription request message (e.g., Nudm_EventExposure_Subscribe Request message) to the UDM. The UDM may transmit an event exposure subscription request message (e.g., Namf_EventExposure_Subscribe Request message) to the AMF. The AMF may transmit an event exposure subscription response message (e.g., Namf_EventExposure_Subscribe Response message) to the UDM. The UDM may transmit an event exposure subscription response message (e.g., Nudm_EventExposure_Subscribe Response message) to the NEF. The NEF may transmit an event exposure subscription response message (e.g., Nnef_EventExposure_Subscribe Response message) to the AF.

During this process, the AF may include an indication in the Nnef_EventExposure_Subscribe asking if it supports an unavailability period. This indication may be transmitted through the UDM to the AMF. The AMF may indicate in the Response message (step 5) whether the terminal supports unavailability periods or not. This information can be passed through the UDM to the NEF and AF.

8. The UE may transmit a NAS message including information about the unavailability period to the AMF. For example, the UE may transmit a NAS message (e.g., a registration related message, a deregistration related message, a newly defined NAS message) to the AMF with the unavailability period information determined by the UE.

The unavailability period information may be information about how much time from now the service will be unavailable (e.g., 20 minutes). Alternatively, the unavailability period information may be information about how long the unavailability will last, i.e., when the unavailability will end (or become available again) (e.g., nn minutes at hh on dd of hh in mm month of yyyy year). In other words, the unavailability period information may express the unavailability period in various forms.

At this point, the terminal may request Mobile Initiated Connection Only (MICO) mode during the registration procedure. The AMF may then accept the MICO mode. At this time, the AMF may set the periodic registration timer to be larger than the unavailability period in consideration of the unavailability period sent by the terminal, and the AMF may transmit the unavailability period to the terminal while accepting the MICO mode.

The terminal may also transmit an unavailability period while performing the deregistration procedure. In this case, the AMF that receives the unavailability period may perform the deregistration procedure in the same way as the prior art deregistration procedure.

Alternatively, new NAS messages can be used to provide information about unavailability periods.

While the terminal is not deregistered and is in an unavailability period, the AMF may need to transfer signaling to the terminal or N2 information for the terminal from another NF (e.g., SMF, PCF, UDM, Short Message Service Function (SMSF), etc.). In this case, the AMF may transmit an error message about the request for N1N2MessageTransfer and provide the maxWaitingTime considering the unavailability period of the terminal. Here, maxWaitingTime is the information that the AMF transmits to the other NFs (e.g., SMF, PCF, UDM, SMSF, etc.), which may mean the maximum value of the time that the other NFs (e.g., SMF, PCF, UDM, SMSF, etc.) should wait. For example, if the SMF receives maxWaitingTime, the SMF may determine the time to buffer the data based on the maxWaitingTime, i.e., the time to buffer the data may be the time determined based on the maxWaitingTime. The AMF does not transmit signaling to the terminal until the terminal becomes connected by performing the registration procedure/service request procedure again, or until the terminal notifies the end of the unavailability period using another NAS message.

After the terminal is in an unavailability period, the AMF may recognize that the unavailability period is over (e.g., the terminal becomes connected by performing a registration/service request again, or the terminal notifies the AMF that the unavailability period is over using another NAS message). In this case, if the AMF needs to report a UE reachability event for the terminal, the AMF may notify it. For example, the AMF may report to the Network Function (NF) that subscribed to the reachability event. For example, NFs that subscribe to such events may be NEFs, SMFs, UDMs, AFs, etc. For example, when an AF subscribes to a UE reachability event, the AF subscribes to the NEF, which subscribes to the UDM, which subscribes to the AMF. Then, when the AMF needs to report a UE reachability event for a terminal, the AMF reports the event to the NEF, which reports back to the AF.

9. If the AMF receives the unavailability period contained in the NAS message and a "Loss of Connectivity" event subscription (or subscriptions) exists for the UE, the AMF may transmit an event notification reporting message to the NEF. The event notification reporting message may include information related to the unavailability period (e.g., time information based on the unavailability period, or the duration of the unavailability period). The AMF may include the unavailability period in the event notification reporting message even if the UE is not deregistered.

10. When the NEF receives the unavailability period in the event notification reporting message from the AMF, the NEF may provide the received unavailability period to the AF.

Instead of the UE transmitting the unavailability period information to the AMF, the UE may notify the AMF that it becomes unavailable/unreachable. This may be, for example, because it is difficult for the UE to determine/estimate the unavailability period. In this case, the UE may also provide information to the AMF indicating that the unavailability period is uncertain. As described above, the AMF receiving the unavailable/unreachable notification from the UE may not include the unavailability period in step 9. Alternatively, the AMF may include information indicating that the unavailability period is uncertain (which may be provided by the UE or may be included by the AMF) and notify about the "Loss of Connectivity" event.

Subsequently, when the UE becomes available/reachable, the UE may notify the AMF. Alternatively, at the time the UE becomes available/reachable, an operation that transitions the UE's state to the conventional connected state may be performed in order to transmit a mobile originating signal or mobile originated data. By performing the operation of transitioning to the connected state, the AMF may be aware that the UE has become available/reachable. When the AMF knows that the UE is available/reachable, the AMF may notify/inform the UDM, the UDM may notify/inform the NEF, and the NEF may notify the AF. The AMF may notify via UE reachability event, Loss of Connectivity event, or a newly defined event. Here, the AF's subscription to the Loss of Connectivity event may be implicitly interpreted as also subscribing to the event to be notified that the UE has become available/reachable. Alternatively, it may be interpreted that when the AF subscribes to the Loss of Connectivity event, the AF shall also subscribe to the event to be notified of becoming available/reachable.

According to the oeprations described in the example of FIG. 7, the UE may provide the unavailability period via a NAS message. When the UE provides the unavailability period via NAS message, the AMF may trigger a "Loss of Connectivity" event report and include the unavailability period in the "Loss of Connectivity" event report message. If the AMF transmits an unavailability period, the NEF may notify the AF of the unavailability period during the "Loss of Connectivity" event reporting.

Note that for the transmission of unavailability periods, new events, such as "Unavailability" event, "Unreachability" event, etc. may be defined and used instead of extending and using the existing "Loss of Connectivity" event as described above.

### 2. A second example of the present disclosure

A second example of the present disclosure may be a description of an operation according to the first example of the present disclosure described above.

Seamless UE context recovery can be supported.

When the UE performs certain events (e.g., OS upgrade, automatic reset when updating the modem or modem software, etc. If a UE becomes unavailable without notification to the core network and/or application functionality, it can cause unnecessary paging and impact critical operations on the application server. To avoid unexpected communication outages and unnecessary signaling to locate the UE during the unavailability period, 5GS supports seamless UE context recovery.

If the UE and the network support an unavailability period and an event is triggered in the UE that causes the UE to be unavailable for a specific period of time, the UE stores the MM context and the Session Management (SM) context in the Universal Subscriber Identity Module (USIM) or in non-volatile memory, and the UE can reuse the MM context and the Session Management (SM) context after the unavailability period. The UE may trigger a mobility registration or deregistration procedure that includes an unavailability period. The AMF may provide a timer for periodic registration updates based on the non-availability period indicated by the UE. For example, the time of the registration update timer provided by the AMF may be greater than the non-availability period provided by the UE. If the UE is not deregistered, the AMF may store information that the UE is unavailable in the context of the UE, and the AMF may consider the UE unreachable until the Unavailability Period elapses or the UE enters the CM-CONNECTED state. While the UE is unreachable, any solution for high-latency communication may be applied if supported. For example, extended data buffering, downlink data buffering status reporting, etc. may be applied. By the AF, if there is a Loss of Connectivity event subscription for the UE (i.e., the AF has subscribed to a Loss of Connectivity event for the UE), the AMF triggers the Loss of Connectivity event reporting, and the AMF may transmit an event reporting message to the NEF containing the unavailability period. The unavailability period may be reported to the subscribed AF. For example, the AMF triggers the Loss of Connectivity event reporting, transmits the unavailability period to the NEF, and the unavailability period is reported to the subscribed AF.

NOTE: How the UE stores the context may vary depending on the UE implementation. The UE can use the existing USIM functionality to store some or all of the UE context in the USIM.

When an event that makes the UE unavailable is completed at the UE, or the event is delayed to a future time or canceled at the UE (e.g., low storage, low battery level), the UE may trigger the registration procedure to resume regular service. In this case, the UE may not include an unavailability period in the registration request message. Depending on the state in which the UE is shut down after the event, the registration procedure may be an initial registration procedure or a mobility registration update procedure.

### 3. A third example of the present disclosure

The third example of the disclosure describes an example in which the operation according to the first and/or second example of the present disclosure described above is applied to a registration procedure.

Referring to the above-described examples of FIGS. 5 and 6, a third example of the present disclosure will be described. In the following, a third example of the present disclosure will be described, focusing on the differences between the examples of FIGS. 5 and 6 and the third example of the present disclosure. For contents other than those described below, the same description may apply as for the examples of FIGS. 5 and 6.

If the UE indicates an unavailability period, the UE may initiate the registration procedure. For example, if the UE indicates an unavailability period, the UE may initiate the registration procedure by using mobility registration update as the registration type.

In step 1 of FIGS. 5 and 6, the registration request message may include a UE MM Core Network Capability and/or an Unavailability Period. If the UE supports the Unavailability Period, the UE may indicate in the UE MM Core Network Capability the capability related to the Unavailability Period. For example, the UE may include information in the UE MM Core Network Capability that the UE supports Unavailability Period.

If the UE and the network support an "Unavailability Period" and the UE becomes unavailable for a period of time, the UE may offer an Unavailability Period. At this time, the terminal may request user plane activation for the Packet (or Protocol) Data Unit (PDU) Session or may not include a Follow-on Request indication. Not requesting user plane activation may mean that the UE does not perform the action of requesting user plane activation by transmitting a List Of PDU Sessions To Be Activated.

In step 21 of FIGS. 5 and 6, the new AMF may transmit a registration acceptance message to the UE, which may include unavailability period support information (e.g., Unavailability Period Supported).

If in step 1 the UE has indicated support for Unavailability Period within the UE 5GMM Core Network Capability and the AMF supports Unavailability Period, the AMF may indicate support to the UE. For example, the AMF may transmit a registration acceptance message to the UE that includes the unavailability period support information. If the UE and the AMF support the Unavailability Period and the UE provided the Unavailability Period in step 1, the AMF stores the received Unavailability Period and considers the UE unreachable until the Unavailability Period elapses or the UE enters the CM-CONNECTED state. While the UE is unreachable, any high-latency communication solution (see clause 5.31.8 of 3GPP TS 23.501 V16.3.0) (e.g., extended data buffering, downlink data buffering status reporting, etc. If there is a "Loss of Connectivity" event subscription for a UE by an AF, the AMF triggers the "Loss of Connectivity" event reporting, transmits the unavailability period to the NEF and the unavailability period is reported to the respective subscribed AF.

In step 22 of FIGS. 5 and 6, if the UE has provided an Unavailability Period in step 1, the AMF may disconnect the signaling immediately after completion of the registration procedure.

### 4. A fourth example of the present disclosure

The fourth example of the present disclosure describes an example in which the operation according to the first example, the second example, and/or the third example of the present disclosure described above is applied to a deregistration procedure.

According to the deregistration procedure, the following operations apply:
- The UE may notify the network that it no longer wishes to access 5GS and optionally indicate an Unavailability Period; and
- The network may inform the UE that it no longer has access to 5GS; or
- The network may inform the UE that the UE's registered PLMN is not allowed to operate at the UE location.

The deregistration request message by the UE and the deregistration request message by the network shall include whether the deregistration applies to a 3GPP access, a non-3GPP access, or both. If the UE is registered to both accesses in the same PLMN, the deregistration message may be sent over any access regardless of which access the deregistration is applied to. If the UE's registered PLMN is not allowed to operate in the current UE location, a network initiated deregistration may be initiated.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

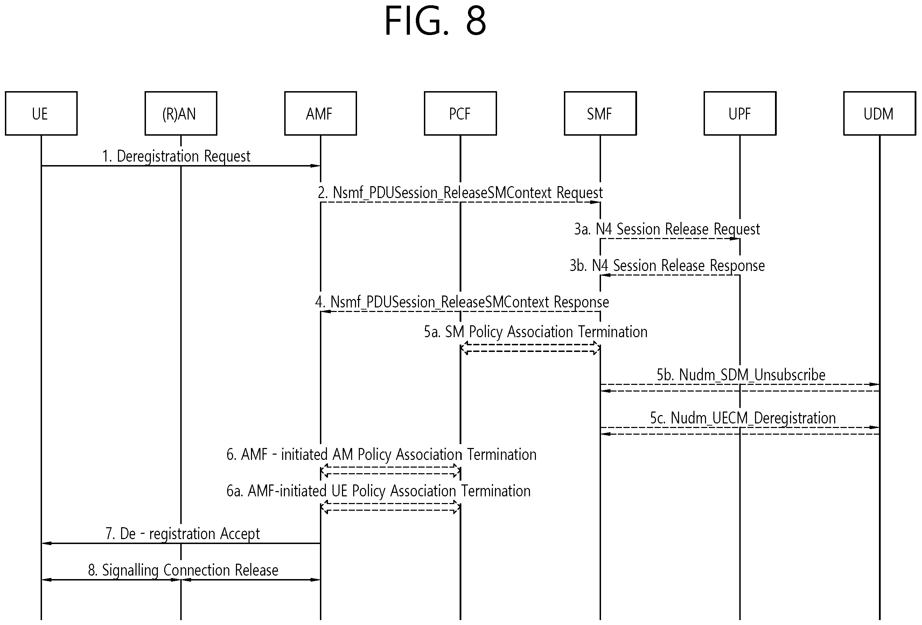

FIG. 8 illustrates an example of a UE-initiated deregistration procedure, according to one embodiment of the present disclosure.

FIG. 8 is an example of a UE-initiated deregistration procedure. A UE may use a different procedure to the example in FIG. 8 to deregister from a registered Public Land Mobile Network (PLMN).
1. The UE transmits a NAS message (e.g., Deregistration Request message) to the AMF. The Deregistration Request message may include information such as 5G-GUTI, Deregistration type (e.g., Switch off), Access Type, Unavailability Period, etc.

The access type indicates whether the deregistration procedure applies to 3GPP access, non-3GPP access, or both. If the UE's 3GPP access and non-3GPP access are serviced by the same AMF, the AMF shall invoke the deregistration procedure for the target access indicated by the UE.

If the UE and the network support an "Unavailability Period" and the UE is unavailable for a period of time as described in the present disclosure, the UE shall provide an Unavailability Period. If there is a "Loss of Connectivity" event subscription for the UE by an AF, the AMF triggers the "Loss of Connectivity" event reporting, transmits the Unavailability Period to the NEF, and the Unavailability Period is reported to each subscribed AF.

2. [Conditional operation] The AMF may transmit the Nsmf_PDUSession_ReleaseSMContext message (including SM Context ID) to the SMF (or V-SMF).

If the UE does not have a PDU session established with the target access indicated in step 1, steps 2 through 5 are not performed.

3. [Conditional operation] The SMF (or H-SMF) releases all resources.

For example, SMF (or H-SMF) releases the IP address/prefix assigned to the PDU session and frees the corresponding user plane resources.

3a. [Conditional operation] The SMF (or H-SMF) transmits an N4 Session Release Request (N4 Session ID) message to the UPF(s) of the PDU Session. The UPF(s) discards the remaining packets in the PDU session and releases all tunnel resources and contexts associated with the N4 session.

3b. [Conditional operation] UPF(s) acknowledges the N4 session release request by transmitting an N4 Session ID response message to the SMF.

4. [Conditional operation] The SMF (or V-SMF) responds with the Nsmf_PDUSession_ReleaseSMContext response message.

5a. [Conditional operation] If dynamic Policy and Charging Control (PCC) is applied to this session, the SMF shall perform the SM Policy Association Termination procedure.

5b-c. [Conditional operation] The PDU session involved in the deregistration may be the last PDU session that the SMF processes for the associated DNN, S-NSSAI for the UE. In this case, the SMF shall unsubscribe from session management subscription data change notifications with the UDM via the Nudm_SDM_Unsubscribe service operation.

6. [Conditional operation] If there is an association with a PCF for this UE and the UE is no longer registered with the access, the AMF shall perform the AMF-initiated AM policy association termination procedure and delete the association with the PCF.

6a. [Conditional operation] If an association with a PCF exists for this UE and the UE is no longer registered via access, perform the AMF-initiated UE policy association termination procedure and delete the association with the PCF.

7. [Conditional operation] The AMF transmits a Deregistration Accept NAS message to the UE according to the deregistration type.

This means that if the Deregistration type is switch-off, AMF will not transmit a Deregistration Accept message.

8. [Conditional operation] The AMF transmits the N2 UE Context Release Request message (with Cause) to the AN.

5. The fifth example of the present disclosure

The fifth example of the present disclosure describes an example in which the operation according to the first, second, third, and/or fourth examples of the present disclosure described above is applied to a procedure related to operating a NEF service.

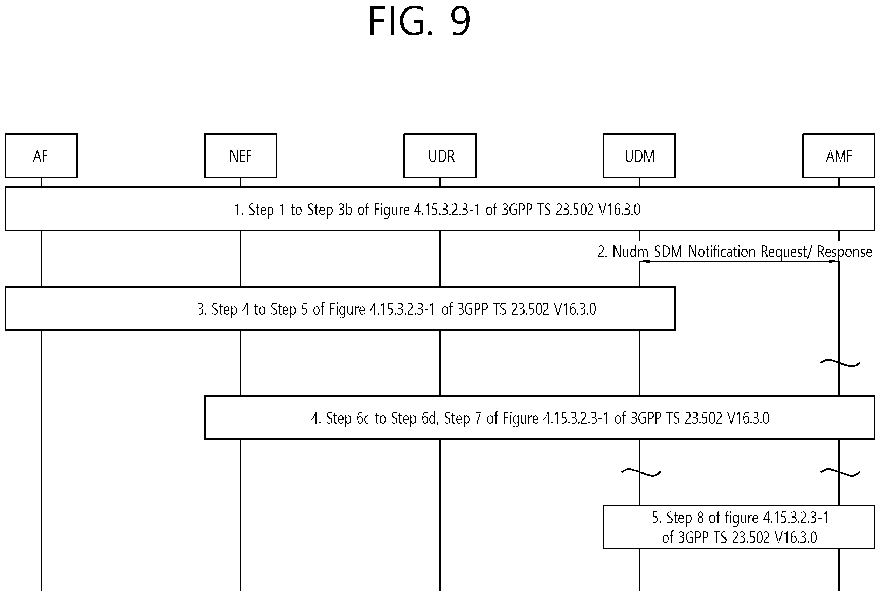

The example in FIG. 9 illustrates the procedures involved in the information flow for specific NEF service operations for loss of connectivity and UE reachability.

This procedure can be used for an AF to subscribe to notifications for loss of connectivity and UE reachability and explicitly cancel previous subscriptions for loss of connectivity and UE reachability.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 9 illustrates an example of a procedure related to NEF service behavior, according to one embodiment of the present disclosure.

For reference, in the example in FIG. 9, Figure 4.15.3.2.3-1 of 3GPP TS 23.502 V16.3.0 can mean "Nnef_EventExposure_Subscribe, Unsubscribe and Notify operations".

The example in FIG. 9 shows an example of Nnef_EventExposure_Subscribe, Unsubscribe, and Notify operation for loss of connectivity and UE reachability.
1. in step 1 of FIG. 9, steps 1 to 3b of Figure 4.15.3.2.3-1 of 3GPP TS 23.502 V16.3.0 may be performed. For reference, the difference between step 1 of FIG. 9 and steps 1 to 3b of Figure 4.15.3.2.3-1 of 3GPP TS 23.502 V16.3.0 is as follows:
   - For Loss of Connectivity, the subscription request may include a maximum detection time.
      In this process, in step 3b of Figure 4.15.3.2.3-1 of 3GPP TS 23.502 V16.3.0, the AMF may inform the AF via UDM whether it supports Unavailability Period by including information related to whether it supports Unavailability Period in the Namf_EventExposure_Subscribe response message. For example, if both the AMF and the terminal support Unavailability Periods, the AMF may inform the AF via UDM. Alternatively, the AMF might notify the AF if the AMF supports it. In this case, the AF can obtain whether the terminal supports Unavailability Period through application layer signaling.
   - For UE accessibility, the subscription request may include a maximum latency, a maximum response time, and/or a proposed number of downlink packets.
2. [Conditional] If the subscribed periodic registration timer has not been set according to any subscription request or network setting, the UDM shall set the subscribed periodic registration timer using the maximum detection time or maximum latency. Otherwise, if the subscribed periodic registration timer was previously set by another subscription identified by a different notification destination address (+ notification correlation ID), or by a different network setting identified by a different NEF reference ID for the same UE, and the newly received Maximum Detection Time or Maximum Latency is lower than the provided periodic registration timer, the UDM shall set the subscribed periodic registration timer using the newly received Maximum Detection Time or Maximum Latency.
3. In step 1 of Figure 9, step 4 to step 5 of Figure 4.15.3.2.3-1 of 3GPP TS 23.502 V16.3.0 may be performed. If in step 1 the AMF indicates that it supports the Unavailability Report, the UDM that receives it informs the NEF that it supports the Unavailability Report (in step 4 of Figure 4.15.3.2.3-1), and the NEF in turn informs the AF that it supports the Unavailability Report (in step 5 of Figure 4.15.3.2.3-1). This allows the AMF to know that the Unavailability Report event is supported for the terminal.
   The AF's knowing that an Unavailability Report event is supported may be due to a service level agreement between the AF and the 5G network. In this case, the AF knows that the terminal supports Unavailability Report because of application layer signaling. The AF can only determine that Unavailability Report events for a terminal are supported if both the 5G network and the terminal support Unavailability Report.
4. In step 4 of FIG. 9, steps 6a to 6d of Figure 4.15.3.2.3-1 of 3GPP TS 23.502 V16.3.0 may be performed. For reference, the difference between step 4 of FIG. 9 and steps 6a to 6d of Figure 4.15.3.2.3-1 of 3GPP TS 23.502 V16.3.0 is as follows:
   - For Loss of Connectivity, the event may be detected when the mobile reachability timer expires or if the UE has provided an Unavailability Period during the deregistration procedure.
   - For UE reachability, events can be detected when the UE changes to connect mode or when the UE becomes reachable for paging.
   - If the Idle Status Indication request was included in step 1 for UE reachability and the AMF supports Idle Status Indication, the AMF may also include Idle Status Indication.
5. In step 5 of FIG. 9, step 8 of Figure 4.15.3.2.3-1 of 3GPP TS 23.502 V16.3.0 may be performed.
6. A sixth example of the present disclosure

The sixth example of the present disclosure describes an example in which the operation according to the first, second, third, fourth, and/or fifth examples of the present disclosure described above is applied.

It should be noted that even if not described in Example 6 of the disclosure, the teachings described in the various examples of the disclosure may be applicable to the sixth example of the present disclosure.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

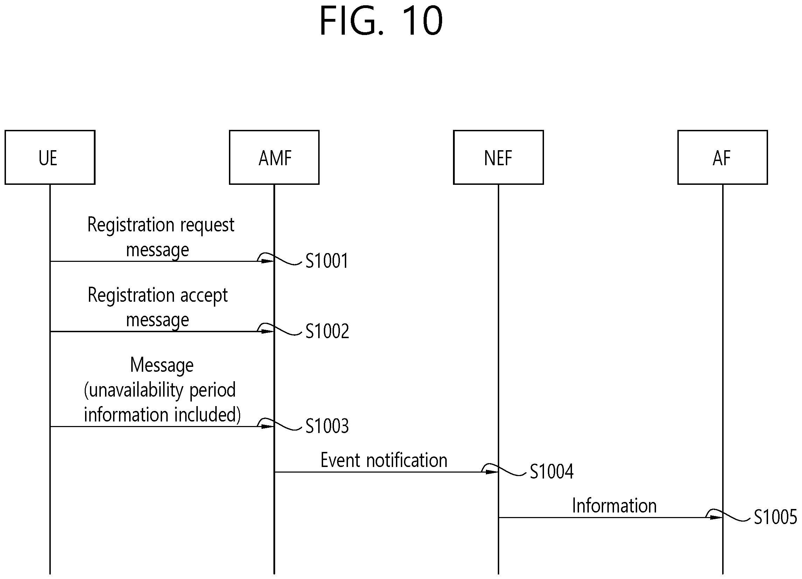

**FIG. 10** **illustrates an example of a procedure for reporting an unavailability period, according to one embodiment of the present disclosure.**

In the example of FIG. 10, UE, AMF, NEF, and AF are shown, but this is by way of example only, and any of the objects previously mentioned in various examples of the present disclosure may perform the operations of the sixth example of the present disclosure.

For example, the UE may transmit a registration request message to the AMF, which may include 5G Mobility Management (5GMM) capability information. The 5GMM capability information may include the UN-PER bit. The UN-PER bit may indicate the ability to support an unavailability period. For example, a UN-PER bit of 0 may indicate that unavailability periods are not supported, and a UN-PER bit of 1 may indicate that unavailability periods are supported. In addition, the registration request message may include information related to unavailability periods. The information related to the unavailability period may be the unavailability period duration. The AMF may transmit a registration accept message to the UE. The registration accept message may include information related to the support of the 5GS network feature. The information related to supporting the 5GS network feature may include information about whether the AMF supports the unavailability period. For example, the information related to 5GS network feature support may be 5GS network feature support. The 5GS network feature support may include a UN-PER bit. A UN-PER bit of 0 may indicate that a period of non-availability is not supported, and a UN-PER bit of 1 may indicate that a period of non-availability is supported.

In step S1001, the UE may transmit a registration request message to the AMF. The registration request message may include capability information related to the unavailability period. For example, the capability information related to the unavailability period may be information that the UE supports the unavailability period.

For example, during the registration procedure, a UE that supports the unavailability period related features may provide information that it supports the unavailability period as part of its 5GMM capability information. For example, the UE may transmit a registration request message to the AMF containing 5GMM capability information, including the UN-PER bit indicating whether it supports unavailability periods.

In step S 1002, the AMF may transmit a registration accept message to the UE, which may include information that the registration accept message supports an unavailability period. The AMF may include the information that the registration acceptance message supports the unavailability period based on receiving capability information related to the unavailability period from the UE. For example, by transmitting a registration acceptance message that includes information that it supports a unavailability period, the AMF may indicate whether the features associated with the unavailability period are supported by the AMF.

In step S1003, the UE may transmit a message including the availability period information to the AMF. Here, the message may be an registration request message or an deregistration request message. For example, based on the information indicated by the AMF that it supports an unavailability period, the UE may transmit a message including the unavailability period information. For example, prior to the start of an event that causes the UE to be unavailable, the UE may transmit a message containing the unavailability period information to the AMF. For example, the UE may perform a mobility registration update or a UE initiated deregistration procedure or registration procedure. For example, if the UE initiates a mobility registration update procedure, and a "Loss of Connectivity" event subscription for the UE by the AF is honored, the AMF may consider the unavailability period when organizing the reporting of the "Loss of Connectivity" event to the NEF. For example, the AMF may consider the time remaining in the unavailability period. The unavailability period may be reported to the subscribed AF. For example, if a "Loss of Connectivity" event subscription exists for a UE, by an AF, when the UE has initiated a UE-initiated deregistration procedure, the AMF may consider the unavailability period when configuring the reporting of the "Loss of Connectivity" event to the NEF. For example, the AMF may consider the time remaining in the unavailability period. The unavailability period may be reported to the subscribed AF.

For example, if the UE and the network (e.g., AMF) have indicated that they support an unavailability period, and an event is triggered that may render the UE unavailable for a period of time, the UE may indicate the unavailability period by transmitting unavailability period information.

In step S1004, the AMF may transmit an event notification message to the NEF. For example, the AMF may transmit an event notification message to the NEF that includes time information based on the unavailability period information, if an event subscription for a loss of connectivity event exists for the UE. The event for loss of connectivity can be an event subscribed to by the AF. The time information based on the unavailability period information may be reported to the AF. For example, the time information based on the unavailability period information may be information about the time remaining in the unavailability period. For example, the time information based on the unavailability period information may be the unavailability period.

For example, if the AMF receives an unavailability period from the UE and a "Loss of Connectivity" monitoring event subscription exists for the UE, the AMF may trigger the reporting of a "Loss of Connectivity" monitoring event. The AMF may also include the remaining value of the unavailability period in the "Loss of Connectivity" event notification message.

For example, if an unavailability period is provided to the AMF from the UE, the AMF may use the value remaining in the unavailability period to determine the expected loss of connectivity time.

In step S1005, the NEF may transmit information related to the unavailability period to the AF.

Note that step S1004 and step S1005 may be performed if, during the registration procedure or the deregistration procedure, the UE has provided the unavailability period information. For example, for Loss of Connectivity, the event may be detected by the AMF if the UE has provided the unavailability period information during the registration procedure or the deregistration procedure.

According to one embodiment of the disclosure, the terminal may determine an unavailability period, and the terminal may communicate the unavailability period to the network using NAS messages. Upon receiving the unavailability period, the AMF may perform a Loss of Connectivity event report for the terminal. In this case, the AMF may transmit a Loss of Connectivity event report along with the unavailability period sent by the terminal. For example, the AMF may transmit a Loss of Connectivity event report to the NEF that includes information based on the unavailability period, and the NEF may transmit it to the AF. For example, if the terminal transmits the unavailability period and notifies the AMF, and the AF has requested a Loss of Connectivity event subscription for the terminal, the AMF can transmit the unavailability period to the NEF when performing the event report.

The present disclosure can have a variety of effects.

For example, a terminal may provide unavailability period information to the network. The network can then inform other AFs of the unavailability period information to prevent unnecessary signaling/data transmission to the terminal. For example, a server may know the unavailability period of a terminal, which prevents the server from transmitting unnecessary data to the terminal. The server can then serve the user through another terminal.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204. And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, NEF, UDR, UDM, AF, etc.) or base station (e.g., NG-RAN, gNB, (R)AN, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by an Access and Mobility Management Function (AMF) and comprising:
receiving a registration request message including capability information related to an unavailability period from a User Equipment (UE);
transmitting a registration accept message including information that the unavailability period is supported to the UE, based on the capability information related to the unavailability period;
receiving a message including the unavailability period information from the UE; and
based on that a loss of connectivity event subscription exists for the UE, transmitting an event notification message including time information based on the unavailability period information to a Network Exposure Function (NEF).

2. The method of claim 1,
wherein the loss of connectivity event subscription for the UE is an event subscription by an Application Function (AF).

3. The method of claim 2,
wherein the time information is reported to the AF.

4. The method of any one of claims 1 to 3, further comprising:
based on that the registration request message including the unavailability period information is received from the UE, releasing the signaling connection with the UE after the registration procedure is completed.

5. The method of any one of claims 1 to 4,
wherein the message including the unavailability period information is a registration request message.

6. The method of any one of claims 1 to 4,
wherein the message including the unavailability period information is a deregistration request message.

7. An Access and Mobility Management Function (AMF) configured to operate in a wireless communication system, the AMF comprising:
at least one transceiver;
at least one processor; and
at least one computer memory operably connectable to the at least one processor and storing instructions that, based on being executed by the at least one processor, perform operations of any one of claims 1 to 6.

8. A method for performing communication related to a communication status, performed by a user equipment (UE) and comprising:
transmitting a registration request message including capability information related to an unavailability period to an Access and Mobility Management Function (AMF);
receiving a registration accept message including information that the unavailability period is supported from the AMF; and
transmitting a message including the unavailability period information to the AMF.

9. The method of claim 8,
wherein the message including the unavailability period information is transmitted, based on that the unavailability period is supported is indicated by the AMF.

10. The method of any one of claim 8 or claim 9,
wherein the unavailability period information is used by the AMF to transmit an event notification message related to a loss of connectivity event subscription for the UE.

11. A User Equipment (UE) configured to operate in a wireless communication system, the UE comprising:
at least one transceiver;
at least one processor; and
at least one computer memory operably connectable to the at least one processor and storing instructions that, based on being executed by the at least one processor, perform operations of any one of claims 8 to 10.

12. An apparatus in a wireless communication, the apparatus comprising:
at least one processor; and
at least one computer memory operably connectable to the at least one processor and storing instructions that, based on being executed by the at least one processor, perform operations of any one of claims 8 to 10.

13. A non-transitory Computer Readable Medium (CRM) storing instructions, wherein based on the instructions being executed by at least one processor, perform the method of any claims 8 to 10.
